(19) Europäisches Patentamt
European Patent Office
Office européen des brevets

(11) **EP 3 572 298 A1**

(12) **EUROPEAN PATENT APPLICATION**

(43) Date of publication:
**27.11.2019 Bulletin 2019/48**

(51) Int Cl.:
***B62D 1/184*** *(2006.01)*    ***B62D 1/185*** *(2006.01)*

(21) Application number: **19171097.9**

(22) Date of filing: **25.04.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2018 JP 2018084450**

(71) Applicant: **JTEKT CORPORATION
Osaka 542-8502 (JP)**

(72) Inventors:
- **OSUKA, Akio**
  **Osaka-shi, Osaka 542-8502 (JP)**
- **TANIOKA, Yasuhiro**
  **Osaka-shi, Osaka 542-8502 (JP)**
- **SUZUKI, Takuya**
  **Osaka-shi, Osaka 542-8502 (JP)**
- **IKEGAMI, Ryoji**
  **Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(54) **STEERING COLUMN DEVICE**

(57) A steering column device includes: an outer tube in which a high rigidity portion and a low rigidity portion are formed; an inner tube disposed in the outer tube; a tubular retainer disposed between the outer tube and the inner tube; at least three protruding portions formed on an outer peripheral surface of the retainer; and a fastening mechanism that regulates relative movement of the outer tube and the inner tube in an axial direction. The at least three protruding portions include: a first protruding portion and a second protruding portion that are disposed so that a midpoint between the first protruding portion and the second protruding portion in a circumferential direction is offset to the high rigidity portion side from a vertical line; and a third protruding portion that is disposed in a region of the low rigidity portion.

*F I G . 4*

EP 3 572 298 A1

**Description**

BACKGROUND OF THE INVENTION

1. Field of the Invention

The invention relates to a steering column device for supporting a steering shaft of a vehicle so that the steering shaft is rotatable.

2. Description of the Related Art

A steering column device for supporting a steering shaft so that the steering shaft is rotatable is installed in a vehicle (see Japanese Patent Application Publication No. 2009-6847 (JP 2009-6847 A), for example). The steering column device has an outer tube, an inner tube, a tubular retainer, and a fastening mechanism. The inner tube is disposed in the outer tube so as to be movable in an axial direction. The retainer is held between the outer tube and the inner tube. A part of the outer tube is deformed radially inward so that the outer tube is fixed to the inner tube by the fastening mechanism.

The steering shaft is rotatably supported inside the outer tube and inside the inner tube. A steering wheel is attached to an end portion of the steering shaft. When adjusting a telescopic position of the steering wheel, the outer tube is moved in the axial direction with respect to the inner tube, after the fixation of the outer tube to the inner tube by the fastening mechanism is released.

However, with the steering column device according to the related art described above, retaining force and a contact surface tend to vary depending on the telescopic position of the steering wheel when the outer tube is fixed to the inner tube by the fastening mechanism.

SUMMARY OF THE INVENTION

An object of the invention is to provide a steering column device that is able to suppress variations in retaining force and a contact surface when regulating relative movement of an outer tube and an inner tube with a fastening mechanism.

According to an aspect of the invention, in a steering column device for supporting a steering shaft so that the steering shaft of a vehicle is rotatable, the steering column device includes: an outer tube that extends along an axial direction, in which a first part and a second part that has a lower rigidity than the first part are formed along a circumferential direction around the axial direction; an inner tube that is disposed in the outer tube and that is moveable in the axial direction with respect to the outer tube; a tubular retainer that is disposed between the outer tube and the inner tube; and a fastening mechanism for regulating relative movement of the outer tube and the inner tube in the axial direction by deforming at least the second part of the outer tube radially inward. At least three protruding portions are formed on any one of an inner peripheral surface of the outer tube, an outer peripheral surface of the retainer, an inner peripheral surface of the retainer, and an outer peripheral surface of the inner tube, the at least three protruding portions disposed at intervals in the circumferential direction and extending along the axial direction. The at least three protruding portions include: a first protruding portion and a second protruding portion that are disposed so that a midpoint between the first protruding portion and the second protruding portion in the circumferential direction is offset to the first part side from a vertical line, in a section orthogonal to the axial direction; and a third protruding portion disposed in a region of the second part.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a perspective view of a steering column device according to an embodiment;
FIG. 2 is a perspective view of the steering column device according to the embodiment, viewed from an angle different from FIG. 1;
FIG. 3 is a sectional view of the steering column device according to the embodiment taken along line III-III in FIG. 1;
FIG. 4 is a sectional view of the steering column device in which a part of FIG. 3 is enlarged;
FIG. 5 is a sectional view of the steering column device according to the embodiment taken along line V-V in FIG. 1;
FIG. 6 is a perspective view of a retainer according to the embodiment;

FIG. 7 is a perspective view of the retainer according to the embodiment viewed from an angle different from FIG. 6;
FIG. 8 is a sectional view of the retainer according to the embodiment taken along line VIII-VIII in FIG. 6; and
FIG. 9 is a diagram illustrating a result of simulations of the embodiment and a comparative example.

DETAILED DESCRIPTION OF EMBODIMENTS

An embodiment of a steering column device according to the invention will be described with reference to the drawings. The embodiments described below indicate examples that are inclusive or specific. Values, shapes, materials, components, layouts and connection forms of the components, steps, order of the steps etc. are exemplary and do not to limit the invention. Among the components of the following embodiment, the components that are not indicated in the independent claim that indicates the highest concept are described as optional components.

The drawings are schematic drawings subjected to emphasis, omission, and adjustment of a ratio, and thus may be different from the actual shape, positional relationship, and ratio.

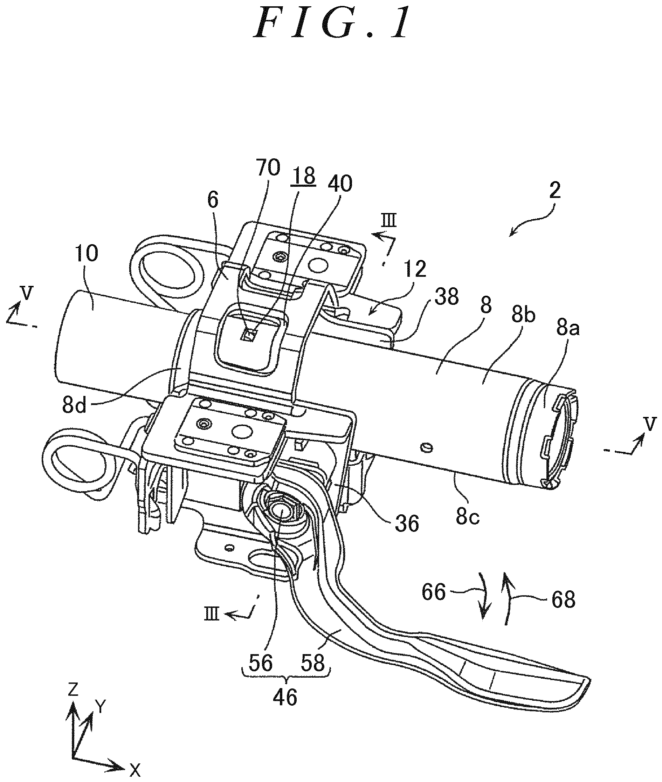

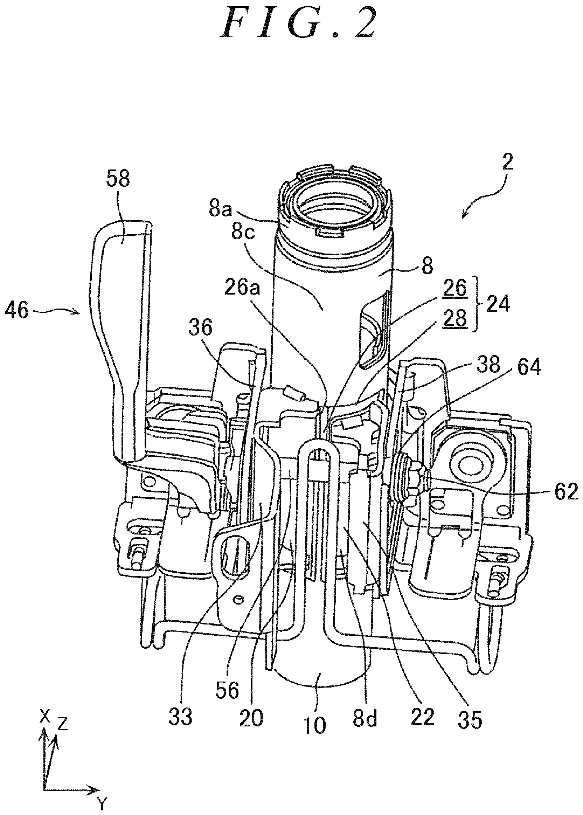

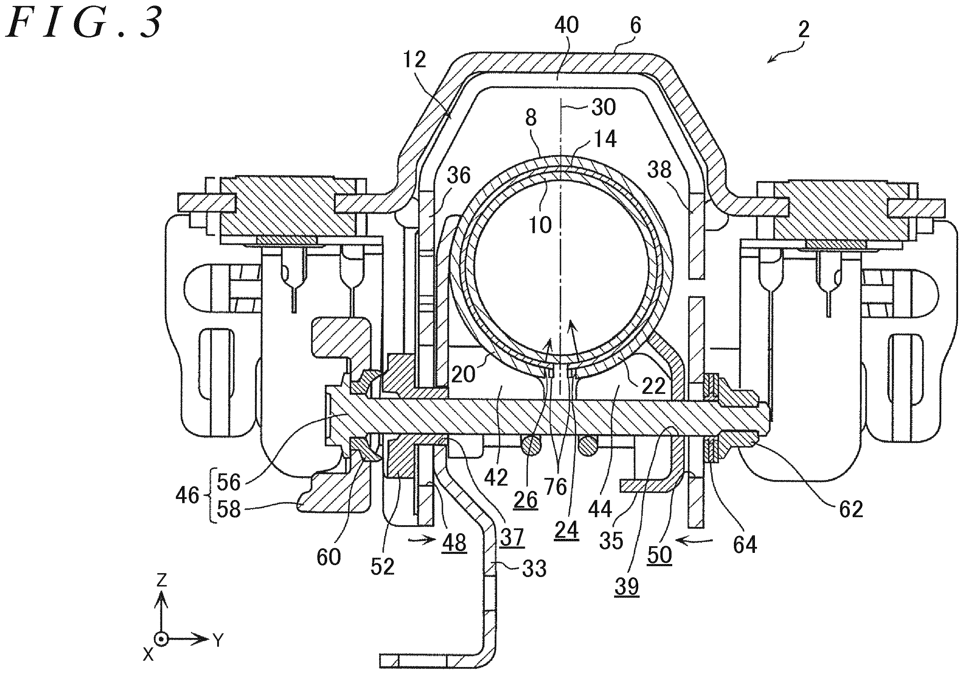

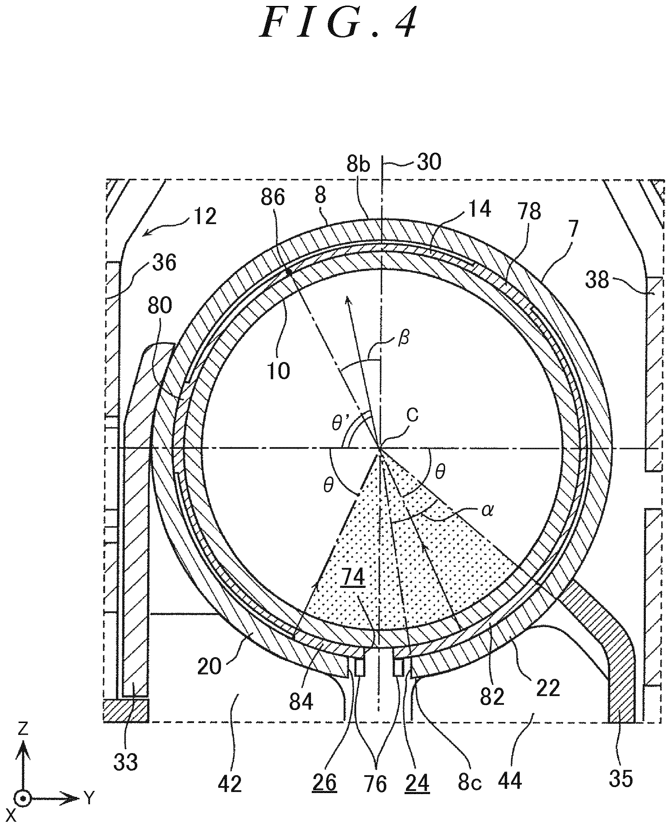

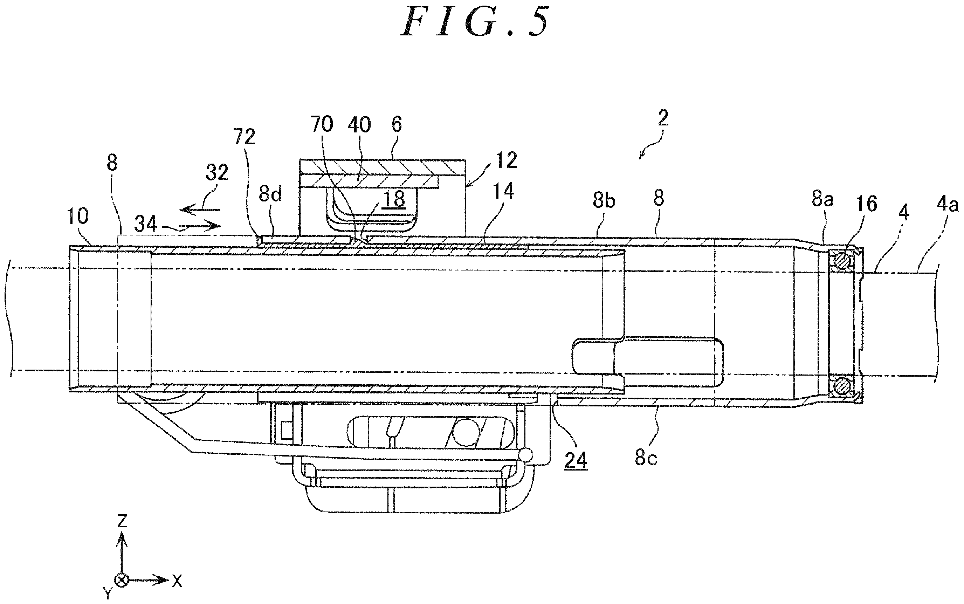

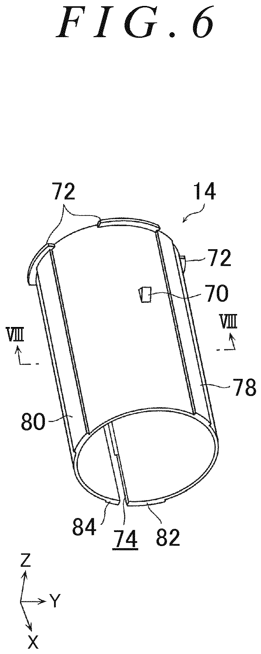

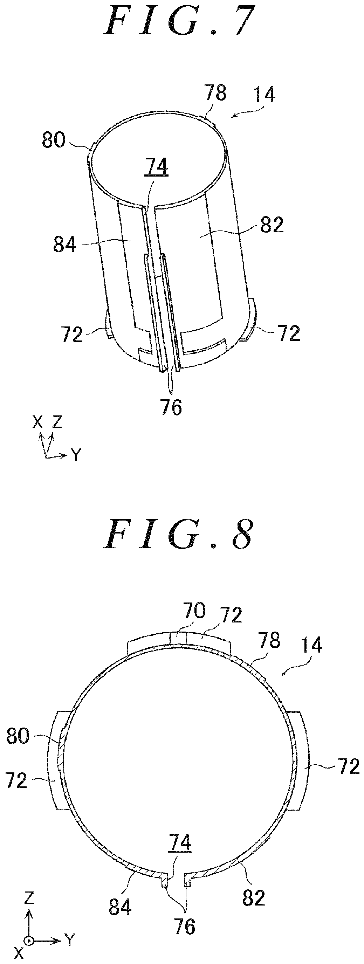

The configuration of a steering column device 2 according to the embodiment will be described with reference to FIGS. 1 to 8. FIG. 1 is a perspective view of the steering column device 2 according to the embodiment. FIG. 2 is a perspective view of the steering column device 2 according to the embodiment, viewed from an angle different from FIG. 1. FIG. 3 is a sectional view of the steering column device 2 according to the embodiment taken along line III-III in FIG. 1. FIG. 4 is a sectional view of the steering column device 2 in which a part of FIG. 3 is enlarged. FIG. 5 is a sectional view of the steering column device 2 according to the embodiment taken along line V-V in FIG. 1. FIG. 6 is a perspective view of a retainer 14 according to the embodiment. FIG. 7 is a perspective view of the retainer 14 according to the embodiment viewed from an angle different from FIG. 6. FIG. 8 is a sectional view of the retainer 14 according to the embodiment taken along line VIII-VIII in FIG. 6.

The steering column device 2 is installed in a vehicle that has a telescopic mechanism and is a device for supporting a steering shaft 4 (see FIG. 5) of the vehicle so that the steering shaft 4 is rotatable. The steering shaft 4 is able to be extended and retracted in an axial direction (X-axis direction). A steering wheel (not shown) is attached to an end portion 4a of the steering shaft 4. The telescopic mechanism is a mechanism for adjusting a telescopic position of the steering wheel in a front-rear direction (X-axis direction) of the vehicle. For convenience of description, illustration of the steering shaft 4 is omitted in FIGS. 1 to 4. The vehicle is an automobile such as a standard-size passenger car, a bus, or a truck. The vehicle is not limited to an automobile, and may be a construction machine or an agricultural machine etc.

As illustrated in FIGS. 1 to 5, the steering column device 2 includes a bracket 6, an outer tube 8, an inner tube 10, a fastening mechanism 12, and a retainer 14.

As illustrated in FIGS. 1 to 3, the bracket 6 supports the fastening mechanism 12 and is fixed to a chassis (not shown) of the vehicle.

As illustrated in FIGS. 1 to 5, the outer tube 8 and the inner tube 10 are tubes made of metal that extend in the axial direction (X-axis direction). The outer tube 8 is disposed rearward in the vehicle (plus side in the X-axis direction) and is also referred to as an upper tube. In contrast, the inner tube 10 is disposed forward in the vehicle (minus side in the X-axis direction) and is also referred to as a lower tube.

The outer tube 8 is supported so as to be movable in the axial direction with respect to the bracket 6, via the fastening mechanism 12. As illustrated in FIG. 5, a bearing portion 16 that supports the steering shaft 4 so that the steering shaft 4 is rotatable is disposed on an inner peripheral surface of an end portion 8a (an end portion facing the rear of the vehicle). As illustrated in FIGS. 1 and 5, a hole portion 18 is formed in an upper end portion 8b of the outer tube 8 in a vertical direction (Z-axis direction that is the direction of gravity).

As illustrated in FIG. 2, a generally L-shaped slit 24 for forming a high rigidity portion 20 (an example of a first part) and a low rigidity portion 22 (an example of a second part) that has a lower rigidity than the high rigidity portion 20 is formed in a lower end portion 8c of the outer tube 8 in the vertical direction. The slit 24 includes a first slit portion 26 and a second slit portion 28. As illustrated in FIGS. 2 to 4, the first slit portion 26 extends along the axial direction from the other end portion 8d (end portion facing the front of the vehicle) of the outer tube 8 in the axial direction. As illustrated in FIGS. 3 and 4, in a section orthogonal to the axial direction, the first slit portion 26 is disposed in a position in which a vertical line 30 (straight line extending in a Z-axis direction) intersects with the lower end portion 8c of the outer tube 8 in the vertical direction. As illustrated in FIG. 2, the second slit portion 28 extends from an end portion 26a (end portion facing the rear of the vehicle) of the first slit portion 26 to one side in a circumferential direction (direction around the axial direction). As illustrated in FIGS. 3 and 4, in the outer tube 8, the slit 24 defines the low rigidity portion 22 on one side in the circumferential direction and the high rigidity portion 20 on the other side with the vertical line 30 as a boundary, in the section orthogonal to the axial direction.

As illustrated in FIG. 3, a pair of support members 33, 35 are fixed to the outer peripheral surface of the outer tube 8 by welding etc. The support member 33 is disposed along an inner surface of a plate member 36 (described below) and is moveable in the axial direction with respect to the plate member 36. The support member 35 is disposed along an inner surface of a plate member 38 (described below) and is moveable in the axial direction with respect to the plate member 38. Elongated holes 37, 39 that extend in the axial direction are formed in the support members 33, 35, respectively.

As illustrated in FIGS. 3 to 5, the inner tube 10 is disposed in the outer tube 8 and is disposed so as to be moveable in the axial direction with respect to the outer tube 8. As illustrated in FIG. 4, a diameter of the inner tube 10 is smaller than a diameter of the outer tube 8 and a clearance for disposing the retainer 14 is formed between an outer peripheral surface of the inner tube 10 and an inner peripheral surface of the outer tube 8. A bearing portion (not shown) for supporting the steering shaft 4 so that the steering shaft 4 is rotatable is disposed on the inner peripheral surface of the inner tube 10.

When the telescopic position of the steering wheel is adjusted, the steering shaft 4 moves (extends and retracts) in the axial direction with respect to the inner tube 10. Thus, the outer tube 8 moves with the steering shaft 4 in the axial direction with respect to the inner tube 10. When the steering wheel is moved to a telescopic position farthest from a driver (hereinafter also referred to as a "telescopic short position"), the outer tube 8 moves in a direction indicated by an arrow 32 in FIG. 5 with respect to the inner tube 10. The outer tube 8 is disposed in a position indicated by a long dashed short dashed line in FIG. 5. In contrast, when the steering wheel is moved to a telescopic position nearest to the driver (hereinafter also referred to as a "telescopic long position"), the outer tube 8 moves in a direction indicated by an arrow 34 in FIG. 5 with respect to the inner tube 10. The outer tube 8 is disposed in a position indicated by a continuous line in FIG. 5. When the steering wheel is disposed in an intermediate position between the telescopic short position and the telescopic long position (hereinafter referred to as a "telescopic neutral position"), the outer tube 8 is disposed in the intermediate position between the position indicated by the continuous line and the position indicated by the long dashed short dashed line in FIG. 5.

The fastening mechanism 12 is a clamp mechanism for regulating relative movement of the outer tube 8 and the inner tube 10 in the axial direction. As illustrated in FIGS. 1 to 3, the fastening mechanism 12 includes the plate members 36, 38, a coupling member 40, a pair of support brackets 42, 44, a lever member 46, a fastening member 52, a rotary cam 60, and a nut 62.

As illustrated in FIG. 3, the plate members 36, 38 are disposed so as to face each other, and are disposed on the opposite sides of the outer tube 8 in a left-right direction (Y-axis direction). A through hole 48 is formed in a lower end portion of the plate member 36 and a through hole 50 is formed in a lower end portion of the plate member 38. The annular fastening member 52 is disposed in the through hole 48 of the plate member 36. Rotation of the fastening member 52 with respect to the plate member 36 is regulated.

The coupling member 40 is fixed to the bracket 6. The coupling member 40 couples upper end portions of the plate members 36, 38. The support bracket 42 is fixed to an outer peripheral surface of the high rigidity portion 20 of the outer tube 8 by welding etc. and is fixed to the support member 33 by welding etc. The support bracket 44 is fixed to an outer peripheral surface of the low rigidity portion 22 of the outer tube 8 by welding etc. and is fixed to the support member 35 by welding etc.

The lever member 46 includes a screw shaft portion 56 and an operation portion 58 provided at a base end portion of the screw shaft portion 56. The screw shaft portion 56 is inserted in the through hole 48 of the plate member 36, the elongated hole 37 of the support member 33, the elongated hole 39 of the support member 35, and the through hole 50 of the plate member 38. The base end portion of the screw shaft portion 56 is inserted in the fastening member 52. The rotary cam 60 cam-engaged with the fastening member 52 is fixed to the base end portion of the screw shaft portion 56. A nut 62 is screwed to a distal end of the screw shaft portion 56. A bearing portion 64 is disposed between the nut 62 and the plate member 38 so as to support the screw shaft portion 56 so that the screw shaft portion 56 is rotatable.

When the driver manually rotates the operation portion 58 in a locking direction (direction indicated by an arrow 66 in FIG. 1), the rotary cam 60 rotates with the rotation of the screw shaft portion 56, with respect to the fastening member 52. Thus, the fastening member 52 moves toward the plate member 38. As illustrated in FIG. 3, the plate members 36, 38 fasten the support members 33, 35 from both sides, and the low rigidity portion 22 is deformed radially inward by the support bracket 44. At this time, the high rigidity portion 20 is also deformed radially inward by the support bracket 42. However, a deformation amount of the high rigidity portion 20 is less than a deformation amount of the low rigidity portion 22. As a result, the relative movement of the outer tube 8 and the inner tube 10 is regulated.

In contrast, when the telescopic position of the steering wheel is adjusted, the driver manually rotates the operation portion 58 in the releasing direction (direction indicated by an arrow 68 in FIG. 1). Thus, the rotary cam 60 rotates with the rotation of the screw shaft portion 56 with respect to the fastening member 52, and the fastening member 52 moves away from the plate member 38. Regulation of the relative movement of the outer tube 8 and the inner tube 10 in the axial direction is therefore released. As a result, the outer tube 8 is moveable with the support member 33, 35 in the axial direction with respect to the inner tube 10. At this time, the screw shaft portion 56 is moveable along a longitudinal direction (X-axis direction) of the elongated hole 37 of the support member 33 and the elongated hole 39 of the support member 35.

The retainer 14 is for suppressing backlash of the steering wheel. As illustrated in FIGS. 6 and 7, the retainer 14 is formed from resin and has a tubular shape. As illustrated in FIGS. 3 to 5, the retainer 14 is disposed between the outer tube 8 (high rigidity portion 20 and low rigidity portion 22) and the inner tube 10. As illustrated in FIGS. 5 and 6, a protrusion 70 is formed on an outer peripheral surface of the retainer 14. As illustrated in FIG. 5, the protrusion 70 is engaged with the hole portion 18 of the outer tube 8. Thus, movement of the retainer 14 in the axial direction and rotation of the retainer 14 around the axial direction is regulated with respect to the outer tube 8. As illustrated in FIGS. 6 and 7, a plurality of rib portions 72 are formed on an end portion of the retainer 14. As illustrated in FIG. 5, the rib portions 72 are engaged with the other end portion 8d of the outer tube 8 in the axial direction.

As illustrated in FIGS. 6 and 7, a slit 74 extending in the axial direction is formed in the retainer 14. Thus, as described above, when the low rigidity portion 22 and the high rigidity portion 20 of the outer tube 8 are deformed radially inward, the retainer 14 is able to be deformed radially inward. As illustrated in FIGS. 7 and 8, a pair of ribs 76 are formed on the sides of the slit 74. As illustrated in FIGS. 3 and 4, the ribs 76 are engaged with a first slit portion 26 of the slit 24 of the outer tube 8.

As illustrated in FIGS. 6 to 8, at least three protruding portions, that is, a first protruding portion 78, a second protruding portion 80, a third protruding portion 82, and a fourth protruding portion 84 are formed on the outer peripheral surface of the retainer 14. The first protruding portion 78, the second protruding portion 80, the third protruding portion 82, and the fourth protruding portion 84 are disposed at intervals in the circumferential direction and extend along the axial direction. Specifically, the first protruding portion 78, the second protruding portion 80, the third protruding portion 82, and the fourth protruding portion 84 continuously extend along the axial direction from one end portion to the other end portion of the retainer 14.

As illustrated in FIG. 4, the first protruding portion 78 is disposed in a region of the low rigidity portion 22 and the second protruding portion 80 is disposed in a region of the high rigidity portion 20. Specifically, in the section orthogonal to the axial direction, the first protruding portion 78 and the second protruding portion 80 are disposed so that a midpoint 86 between the first protruding portion 78 and the second protruding portion 80 (illustrated by a black dot in FIG. 4) in the circumferential direction is offset to the high rigidity portion 20 from the vertical line 30. The third protruding portion 82 is disposed in a region of the low rigidity portion 22 and is disposed along one side of the first slit portion 26. The fourth protruding portion 84 is disposed in a region of the high rigidity portion 20 and is disposed along another side of the first slit portion 26.

As illustrated in FIG. 4, in the section orthogonal to the axial direction, a central angle β formed by the vertical line 30 and the midpoint 86 about a radial center C of the retainer 14 is smaller than a central angle α formed by both ends of the second slit portion 28 about the radial center C. Thus, it is possible to increase gripping force of the outer tube 8 gripping the inner tube 10.

Here, a method of setting the positions of the first protruding portion 78, the second protruding portion 80, the third protruding portion 82, and the fourth protruding portion 84 with respect to the outer tube 8 will be described. As illustrated in FIG. 4, when the outer tube 8 is fixed to the inner tube 10 by the fastening mechanism 12, and a deformation amount (thrust load ratio) of the outer tube 8 is analyzed by a finite element method (FEM), a ratio of the high rigidity portion 20 to the low rigidity portion 22 is 1 to 4. When a thrust angle of the high rigidity portion 20 and a thrust angle of the low rigidity portion 22 with respect to a horizontal direction (Y-axis direction) are both θ (approximately 65 degrees), a compound thrust angle 0' of the two is obtained by the following equation.

$$\theta' = \tan^{-1}\left(\frac{\frac{5}{4}\sin\theta}{\frac{3}{4}\cos\theta}\right) = \tan^{-1}\left(\frac{5}{3}\tan\theta\right) = 74.4[deg] \qquad \text{Equation (1)}$$

Thus, in the section orthogonal to the axial direction, on a pressing side (side close to the support brackets 42, 44), force is applied from the outer tube 8 to the inner tube 10 in a prescribed region (region in FIG. 4 with half-tone dot meshing). The prescribed region extends with its center offset by approximately 25 degrees (= 90° - 74.4°) to the low rigidity portion 22 side with respect to the vertical line 30. Thus, in the prescribed region described above, the third protruding portion 82 is disposed along one side of the first slit portion 26 in the region of the low rigidity portion 22, and the fourth protruding portion 84 is disposed along the other side of the first slit portion 26 in the region of the high rigidity portion 20. Therefore, the force from the outer tube 8 is able to be effectively received by the third protruding portion 82 and the fourth protruding portion 84.

In contrast, on a receiving side (side away from the support brackets 42, 44), it is preferable that force from the outer tube 8 be received by at least two positions, taking into consideration the variation of the contact range. Thus, in the section orthogonal to the axial direction, the first protruding portion 78 and the second protruding portion 80 are disposed so that the midpoint 86 therebetween in the circumferential direction is offset to the high rigidity portion 20 side from the vertical line 30. Therefore, the force from the outer tube 8 is able to be effectively received by the first protruding portion 78 and the second protruding portion 80.

In the steering column device 2 of the embodiment, the following advantageous effects are obtained. When the telescopic position of the steering wheel is changed to the telescopic short position, the telescopic neutral position, and the telescopic long position, retaining force and the contact surface when regulating the relative movement of the outer tube 8 and the inner tube 10 in the axial direction is changed. This is because rigidity of the outer tube 8 is not constant in the axial direction. Thus, even if fastening force by the fastening mechanism 12 is constant, the amount of radially inward deformation of the outer tube 8 varies depending on the telescopic position. The contact position between the retainer 14 with respect to the inner tube 10 is thus changed. Since the high rigidity portion 20 and the low rigidity portion 22 are formed in the outer tube 8, rigidity of the outer tube 8 is not constant along the circumferential direction. If a retainer in which the protruding portion is not formed on the outer peripheral surface is used, retaining force and the contact surface vary when the relative movement of the outer tube 8 and the inner tube 10 in the axial direction is regulated by the fastening mechanism 12, depending on the telescopic position of the steering wheel.

In the steering column device 2 of the embodiment, as described above, the first protruding portion 78, the second protruding portion 80, the third protruding portion 82, and the fourth protruding portion 84 are formed on the outer peripheral surface of the retainer 14. Suppose the telescopic position of the steering wheel is changed to the telescopic short position, the telescopic neutral position, and the telescopic long position. Even in such a case, only the first protruding portion 78, the second protruding portion 80, the third protruding portion 82, and the fourth protruding portion 84 of the outer peripheral surface of the retainer 14 are constantly in contact with the inner peripheral surface of the outer tube 8, when the relative movement of the outer tube 8 and the inner tube 10 in the axial direction is regulated by the fastening mechanism 12. As described above, in the first protruding portion 78, the second protruding portion 80, the third protruding portion 82, and the fourth protruding portion 84, the force from the outer tube 8 is able to be effectively received. Thus, it is possible to suppress variations in retaining force and the contact surface when the relative movement of the outer tube 8 and the inner tube 10 in the axial direction is regulated by the fastening mechanism 12.

Weld beads may be formed in the outer tube 8. However, when the first protruding portion 78, the second protruding portion 80, the third protruding portion 82, and the fourth protruding portion 84 are formed on the outer peripheral surface of the retainer 14, it is possible to suppress variations in retaining force and the contact surface caused by the weld beads.

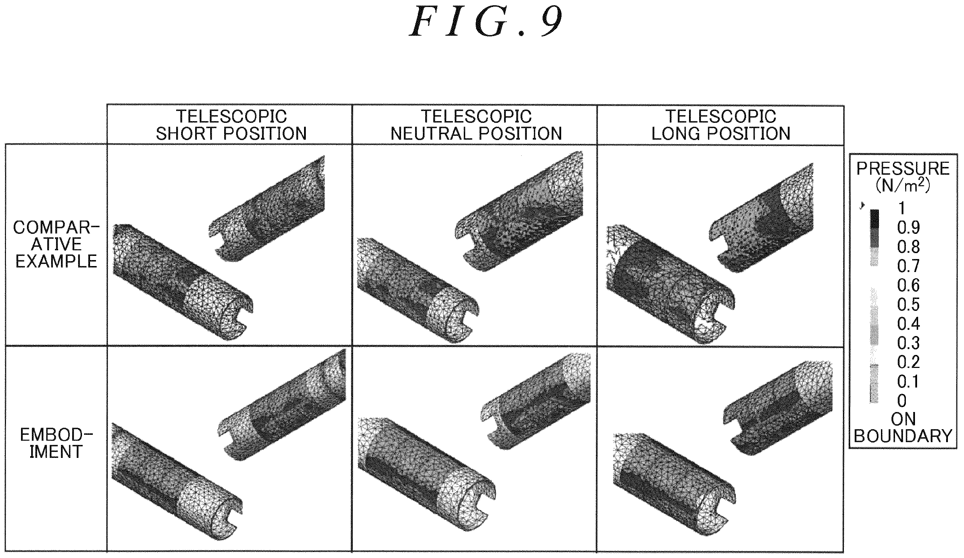

Here, in order to confirm the advantageous effects described above with reference to FIG. 9, the following simulation was performed. FIG. 9 is a diagram illustrating a result of the simulation of the embodiment and a comparative example.

As the embodiment, simulation was performed to obtain the pressure on the outer peripheral surface of the inner tube 10 when the steering wheel was disposed at the telescopic short position, the telescopic neutral position, and the telescopic long position using the retainer 14 of the embodiment. Here, the first protruding portion 78, the second protruding portion 80, the third protruding portion 82, and the fourth protruding portion 84 are formed on the outer peripheral surface of the retainer 14. The axial tension was 2500 N.

As a comparative example, simulation was performed to obtain the pressure on the outer peripheral surface of the inner tube when the steering wheel was disposed at the telescopic short position, the telescopic neutral position, and the telescopic long position using a retainer in which a protruding portion is not formed on an outer peripheral surface. The axial tension was 2500 N.

The results of the simulations of the embodiment and the comparative example are as illustrated in FIG. 9. As illustrated in FIG. 9, in the comparative example, when the telescopic position of the steering wheel was changed to the telescopic short position, the telescopic neutral position, and the telescopic long position, the pressure (that is, retaining force and the contact surface) on the outer peripheral surface of the inner tube varied.

In contrast, as illustrated in FIG. 9, in the embodiment, when the telescopic position of the steering wheel was changed to the telescopic short position, the telescopic neutral position, and the telescopic long position, variation in the pressure (that is, retaining force and the contact surface) on the outer peripheral surface of the inner tube was reduced.

It should be noted that the invention is not limited to the above-described embodiment. For example, another embodiment realized by combining the components or excluding a number of the components described in the description may be applied as the embodiment of the invention. Modifications that can be made by those skilled in the art without departing from the meanings of the expressions in the claims are included in the invention.

In the embodiment, the first protruding portion 78, the second protruding portion 80, the third protruding portion 82, and the fourth protruding portion 84 are formed on the outer peripheral surface of the retainer 14. However, the configuration is not limited to this. The first protruding portion 78, the second protruding portion 80, the third protruding portion 82, and the fourth protruding portion 84 may be formed on any one of the inner peripheral surface of the outer tube 8, the inner peripheral surface of the retainer 14, and the outer peripheral surface of the inner tube 10, for example.

In the embodiment described above, the high rigidity portion 20 and the low rigidity portion 22 are formed by forming the slit 24 in the outer tube 8. However, the configuration is not limited to this. The high rigidity portion 20 and the low rigidity portion 22 may be formed in the outer tube 8 by changing a thickness of the outer tube 8 along the circumferential direction, for example.

In the embodiment described above, the first protruding portion 78, the second protruding portion 80, the third protruding portion 82, and the fourth protruding portion 84 continuously extend along the axial direction from one end portion to the other end portion of the retainer 14. However, the configuration is not limited to this. The first protruding portion 78, the second protruding portion 80, the third protruding portion 82, and the fourth protruding portion 84 may be disposed at intervals (intermittently) along the axial direction, for example.

In the embodiment described above, the first protruding portion 78, the second protruding portion 80, the third protruding portion 82, and the fourth protruding portion 84 are formed on the outer peripheral surface of the retainer 14. However, the fourth protruding portion 84 may be omitted. That is, at least the first protruding portion 78, the second protruding portion 80, and the third protruding portion 82 may be formed on the outer peripheral surface of the retainer 14.

The steering column device according to the invention is able to be applied to vehicles that have a telescopic mechanism, for example.

With the steering column device according to an aspect of the invention, it is possible to reduce variations in retaining force and the contact surface when the relative movement of the outer tube and the inner tube is regulated by the fastening mechanism.

## Claims

1. A steering column device for supporting a steering shaft of a vehicle so that the steering shaft is rotatable, the steering column device comprising:

   an outer tube that extends along an axial direction, in which a first part and a second part that has a lower rigidity than the first part are formed along a circumferential direction around the axial direction;
   an inner tube that is disposed in the outer tube and that is moveable in the axial direction with respect to the outer tube;
   a tubular retainer that is disposed between the outer tube and the inner tube; and
   a fastening mechanism for regulating relative movement of the outer tube and the inner tube in the axial direction by deforming at least the second part of the outer tube radially inward, wherein
   at least three protruding portions are formed on any one of an inner peripheral surface of the outer tube, an outer peripheral surface of the retainer, an inner peripheral surface of the retainer, and an outer peripheral surface of the inner tube, the at least three protruding portions disposed at intervals in the circumferential direction and extending along the axial direction, and
   the at least three protruding portions include:

      a first protruding portion and a second protruding portion that are disposed so that a midpoint between the first protruding portion and the second protruding portion in the circumferential direction is offset to the first part side from a vertical line, in a section orthogonal to the axial direction; and
      a third protruding portion disposed in a region of the second part.

2. The steering column device according to claim 1, wherein
   the outer tube has a slit for forming the first part and the second part, and
   the slit includes:

      a first slit portion that is disposed in a boundary portion of the first part and the second part and that extends along the axial direction; and
      a second slit portion that extends in the circumferential direction from the first slit portion to the second part side.

3. The steering column device according to claim 2, wherein
   the third protruding portion is disposed along the first slit portion in the region of the second part.

4. The steering column device according to claim 2 or 3, wherein
   the at least three protruding portions include a fourth protruding portion disposed to extend along the first slit portion in a region of the first part.

5. The steering column device according to any one of claims 2 to 4, wherein
   a central angle formed by the vertical line and the midpoint about a radial center of the retainer is smaller than a central angle formed by both ends of the second slit portion about the radial center, in the section orthogonal to the axial direction.

**6.** The steering column device according to any one of claims 1 to 5, wherein
the at least three protruding portions are formed on the outer peripheral surface of the retainer and are in contact
with the inner peripheral surface of the outer tube.

# FIG.1

# FIG.2

*F I G . 3*

# F I G . 4

# FIG. 5

# F I G . 6

# FIG. 7

# FIG. 8

# FIG. 9

Europäisches
Patentamt

European
Patent Office

Office européen
des brevets

# EUROPEAN SEARCH REPORT

**Application Number**

EP 19 17 1097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/318303 A1 (SUGIURA TOMONORI [JP]) 30 October 2014 (2014-10-30) | 1,6 | INV. B62D1/184 B62D1/185 |
| A | * paragraph [0038]; figure 2 * | 2 | |
| X | EP 3 018 033 A1 (JTEKT CORP [JP]) 11 May 2016 (2016-05-11) | 1,6 | |
| A | * abstract; figures * | 2 | |
| X | KR 101 799 670 B1 (NAMYANG IND CO LTD [KR]) 21 November 2017 (2017-11-21) * figure 5 * | 1-6 | |
| X | WO 2017/069186 A1 (NSK LTD [JP]) 27 April 2017 (2017-04-27) * figures * & US 2018/229755 A1 (KUROKAWA YOSHIFUMI [JP]) 16 August 2018 (2018-08-16) | 1,6 | |
| X | DE 10 2015 000028 A1 (THYSSENKRUPP AG [DE]; THYSSENKRUPP PRESTA AG [LI]) 14 July 2016 (2016-07-14) * figures 5,6 * | 1 | |
| E | EP 3 489 111 A1 (NSK LTD [JP]) 29 May 2019 (2019-05-29) * figure 4 * | 1 | TECHNICAL FIELDS SEARCHED (IPC) B62D |
| A | US 5 758 545 A (FEVRE LAURENT [FR] ET AL) 2 June 1998 (1998-06-02) * abstract; figures * | 1 | |

The present search report has been drawn up for all claims

| Place of search | Date of completion of the search | Examiner |
|---|---|---|
| The Hague | 22 October 2019 | Pemberton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 1097

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2019

| Patent document cited in search report | | | Publication date | Patent family member(s) | | | Publication date |
|---|---|---|---|---|---|---|---|
| US 2014318303 | A1 | | 30-10-2014 | CN | 104118470 | A | 29-10-2014 |
| | | | | EP | 2796341 | A1 | 29-10-2014 |
| | | | | JP | 6080008 | B2 | 15-02-2017 |
| | | | | JP | 2014213692 | A | 17-11-2014 |
| | | | | US | 2014318303 | A1 | 30-10-2014 |
| EP 3018033 | A1 | | 11-05-2016 | CN | 105377666 | A | 02-03-2016 |
| | | | | EP | 3018033 | A1 | 11-05-2016 |
| | | | | JP | 6414661 | B2 | 31-10-2018 |
| | | | | JP | 2015027866 | A | 12-02-2015 |
| | | | | US | 2016114827 | A1 | 28-04-2016 |
| | | | | WO | 2015002265 | A1 | 08-01-2015 |
| KR 101799670 | B1 | | 21-11-2017 | NONE | | | |
| WO 2017069186 | A1 | | 27-04-2017 | CN | 107921987 | A | 17-04-2018 |
| | | | | EP | 3315381 | A1 | 02-05-2018 |
| | | | | JP | 6493550 | B2 | 03-04-2019 |
| | | | | JP | WO2017069186 | A1 | 26-04-2018 |
| | | | | US | 2018229755 | A1 | 16-08-2018 |
| | | | | WO | 2017069186 | A1 | 27-04-2017 |
| DE 102015000028 | A1 | | 14-07-2016 | CN | 107454880 | A | 08-12-2017 |
| | | | | DE | 102015000028 | A1 | 14-07-2016 |
| | | | | EP | 3242826 | A1 | 15-11-2017 |
| | | | | US | 2018273082 | A1 | 27-09-2018 |
| | | | | WO | 2016110335 | A1 | 14-07-2016 |
| EP 3489111 | A1 | | 29-05-2019 | CN | 109476335 | A | 15-03-2019 |
| | | | | EP | 3489111 | A1 | 29-05-2019 |
| | | | | JP | WO2018016491 | A1 | 09-05-2019 |
| | | | | US | 2019300041 | A1 | 03-10-2019 |
| | | | | WO | 2018016491 | A1 | 25-01-2018 |
| US 5758545 | A | | 02-06-1998 | DE | 69601836 | D1 | 29-04-1999 |
| | | | | DE | 69601836 | T2 | 11-11-1999 |
| | | | | EP | 0755843 | A1 | 29-01-1997 |
| | | | | ES | 2128825 | T3 | 16-05-1999 |
| | | | | FR | 2737173 | A1 | 31-01-1997 |
| | | | | US | 5758545 | A | 02-06-1998 |

EPO FORM P0459

For more details about this annex : see Official Journal of the European Patent Office, No. 12/82

**EP 3 572 298 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009006847 A